# EUROPEAN PATENT SPECIFICATION

(11) **EP 0 793 076 B1**
(45) Date of publication and mention of the grant of the patent: **26.09.2001**
(21) Application number: 97103133.1
(22) Date of filing: 26.02.1997
(51) Int. Cl.: G01D 5/165, B60Q 1/076

(54) **Device for detecting the position of the output shaft of an actuator**
Vorrichtung zur Bestimmung der Ausgangswellenposition eines Stellgliedes
Dispositif de détection de la position de l'arbre de sortie d'une actionneur

(30) Priority: 27.02.1996 IT TO960139
(43) Date of publication of application: 03.09.1997
(73) Proprietor: Automotive Lighting Italia Spa, 10078 Venaria Reale (Torino) (IT)
(72) Inventor: Alotto, Giorgio, 10055 Condove (IT); Lando, Claudio, 20137 Milano (IT); Portoso, Mauro, 10090 Sangano (IT); Todesco, Floriano, 10093 Collegno (IT)
(74) Representative: Cerbaro, Elena, Dr.

(56) References cited:
- EP-A- 0 386 439
- DE-A- 2 635 614
- GB-A- 2 025 598
- GB-A- 2 239 513
- US-A- 5 343 188
- PATENT ABSTRACTS OF JAPAN vol. 008, no. 094 (M-293), 28 April 1984 & JP 59 008544 A (KOITO SEISAKUSHO KK), 17 January 1984,

## Description

The present invention relates to a device for detecting the position of the output shaft of an actuator. In particular, the present invention refers to a device for detecting the position of the output shaft of an actuator for a headlight aim-correcting mechanism.

As is known, actuators used for the automatic operation of headlight aim-correcting mechanisms comprise output members consisting of a drive wheel and an output shaft with a ball end. The drive wheel is driven by an electric motor and transmits the drive to the output shaft through a screw and nut coupling. The output shaft, which can move along its own longitudinal axis, is engaged, in use, with ball joints mounted on the headlamps; in particular the ball end of the output shaft engages in these ball joints and the translational movement of the output shaft can thus be used to vary the orientation of the vehicle's headlamps.

In order to ensure accurate positioning of the headlamps, devices are also provided for monitoring the headlamps for correct orientation.

These monitoring devices are closed-loop systems that correct any errors in the orientation of the headlamps by using an electrical signal generated by devices that detect the movement of the actuator output shaft through the movement of the cursor of a potentiometer connected to this output shaft which generates the electrical signal fed to the monitoring device in response to the potentiometer's electrical resistance.

The position detecting devices generally use a commercially available potentiometer situated in the immediate vicinity of the actuator output shaft. However, this arrangement has drawbacks because the potentiometer is somewhat expensive and its dimensions are such that the position detecting device takes up a lot of space.

GB-A-2 025 598 discloses a device for adjusting the headlamps of motor vehicles, the device having an electrical drive motor which can move a pivotally mounted headlamp member into a plurality of prescribed pivoted position by way of a drive mechanism and an adjusting spindle. An electrical switching device is provided for controlling the drive motor and has a movable contact carrier which is coupled to the drive mechanism or the adjusting spindle and effects a switching movement upon adjustment of the headlamp from one pivoted position into another pivoted position. The drive motor drives the movable contact carrier nonlinearly relative to the adjusting spindle such that, with unequal angles of traverse between the pivoted positions of the headlamps, at least approximately equal adjusting paths of the movable contact carrier ensures.

GB-A-2 239 513 discloses a vehicle headlight comprising an outer casing mounted in a fixed position on the vehicle, a reflector housed inside the casing so as to rotate in relation to the same about at last one axis, actuating means for rotating the reflector in relation to the casing and about said axis, and means for detecting the position of the reflector in relation to the casing and about said axis. The actuating means comprises an output member designed to move in relation to the casing and connected to the reflector and an actuating device for the output member, and the detecting means comprises a mobile input member and releasable coupling means arranged between the output member and the input member.

EP-A-0 386 439 discloses an angle sensor for determining the rotation of a steering column, upon which a pick-off element having a flange is constructed. Arranged on an end face of the flange is a potentiometer whose wiper slides on a conductor track provided on the inner wall of a housing and generates a fine signal. The potentiometer has a measuring range of approximately 360°, so that the measuring signal is periodically repeated given the full rotary range of the steering column. Constructed on the other side face of the flange is a spiral guide groove, in which the guide pin of a potentiometer which generates a coarse signal slides. The precise angular position of the steering column can be determined by combining the coarse and fine signals by means of a computer.

It is an object of the present invention, therefore, to provide a detecting device that does not have the disadvantages described above.

The present invention provides a device for detecting the position of the output shaft of an actuator that comprises output components that include an output shaft and a drive wheel acting on said output shaft, which detecting device comprises a potentiometer with a movable cursor and drive means for moving said cursor in accordance with the movements of said output components, which device is characterized in that said drive means comprise cam means mounted on said drive wheel and in that said cursor of said potentiometer engages with said cam means.

In order that the present invention may be understood more thoroughly, a number of preferred embodiments will now be described, purely by way of nonlimiting examples, with reference to the accompanying drawings in which:
- Figure 1 is a perspective view of an actuator having a first embodiment of the position detecting device forming the subject of the invention;
- Figure 2 is a cross-section through the actuator of fig. 1;
- Figure 3 illustrates in cross-section a variant of the position detecting device of Fig. 2;
- Figure 4 is a cross-section of a different embodiment of the position detecting device forming the subject of the invention;
- Figure 5 is a plan view of a detail of the position detecting device of Fig. 4; and
- Figure 6 is a cross-section of another embodiment of the position detecting device forming the subject of the invention.

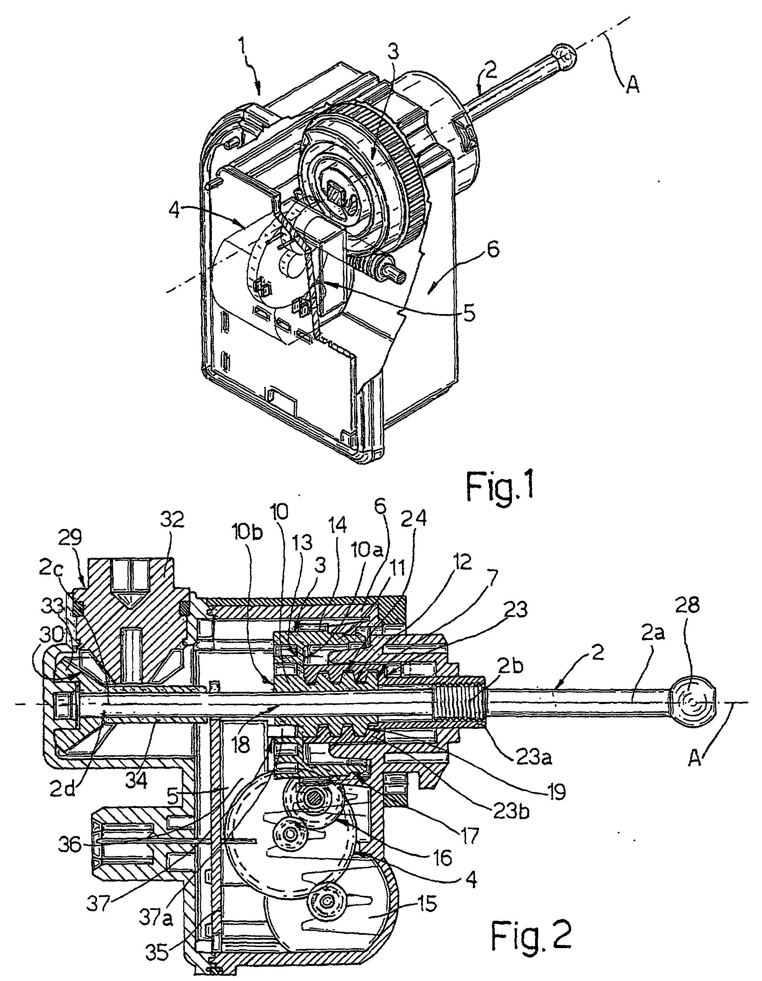

In Figure 1 the numeral 1 is a general label for an actuator comprising an output shaft 2 of axis A, a drive wheel 3 able to turn about the axis A, a device 4 for driving the drive wheel 3 and a detecting device 5 designed to establish the position of the output shaft 2.

An outer casing 6 supports the drive wheel 3, the drive device 4 and the detecting device 5.

As can be seen more clearly in Figure 2, the drive wheel 3 is mounted coaxially with the output shaft 2 and is coupled to it by means of a screw and nut coupling 7.

The drive wheel 3 comprises a main body 10 of approximately circular shape; a cylindrical ring 11 integral with the main body 10 and projecting, coaxially with the axis A, from the perimeter of a first face 10a of the main body 10; and a tubular part 12 which is also coaxial with the axis A and projects from the same face 10a of the main body 10.

A spiral groove 13 is formed on a second face 10b of the main body 10 of the drive wheel 3, which is the opposite side from the first face 10a.

The cylindrical ring 11 carries external teeth 14 engaging with the drive device 4 which comprises an electric motor 15 and transmission gears 16 connected to the electric motor 15 and to the external teeth 14.

The cylindrical ring 11 also has supporting means 17 engaged with the casing 6 so that the drive wheel 3 can only rotate and cannot move translationally.

The main body 10 and the tubular part 12 have a through hole 18 coaxial with the axis A and the tubular part 12 also has a helical external thread 19 defining a worm.

A hollow cylindrical body 23 is coupled externally to the tubular part 12 and comprises a first tapped end portion 23a, part of which extends outside the casing 6, and a second end portion 23b, internally threaded 24, and coupled to the external thread 19 of the tubular part 12.

The threads 24 and 19 define the screw and nut coupling 7 through which the output shaft 2 and the drive wheel 3 engage with each other, in such a way that any rotation of the drive wheel 3 is accompanied by a corresponding translational movement of the cylindrical body 23 along the direction defined by the axis A.

The output shaft 2 comprises a first, externally threaded, intermediate portion 2b coupled without the possibility of relative axial movement to the internal thread of the first end portion 23b of the hollow cylindrical body 23, a second portion 2a on the outside of the casing 6 ending in a ball 28 which is engaged, in use, with ball joints (not shown), and a third portion 2c on the other side of the portion 2b away from the portion 2a, of square cross-section and situated inside the through hole 18.

A manual mechanism 29 for adjusting the position of the output shaft 2 sits in the casing 6 and comprises a bevel gear transmission 30. In particular the bevel gear transmission 30 comprises a first bevel gear 32 that can be turned by hand from the outside by means of a key (not shown) and a second bevel gear 33 meshing with the first bevel gear 32 and having a sleeve 34. One end 2d of the third portion 2c of the output shaft 2 is connected in an angularly fixed manner to this sleeve 34.

The position detecting device 5 comprises a printed circuit 35 situated close to the second face 10b of the main body 10 of the drive wheel 3, and a potentiometer 36 situated on the printed circuit 35 opposite the drive wheel 3. The potentiometer 36 has a cursor 37 capable of rectilinear movement with one end 37a inserted in the spiral groove 13 formed on the second face 10b of the main body 10 of the drive wheel 3.

The actuator 1 works as follows.

With the electric motor 15 turning, the drive wheel 3 revolves and transmits its motion to the output shaft 2 through the screw and nut coupling 7. More specifically, any angular movement of the drive wheel 3 is accompanied by a corresponding rectilinear movement of the output shaft 2 in the direction of the axis A.

The drive wheel 3 is also bringing about rotation of the spiral groove 13, which in turn causes the cursor 37 of the potentiometer 36 to move and thus varies the resistance of the potentiometer 36. This change in resistance consequently indicates the position of the output shaft 2.

The shape of the spiral groove 13 can moreover be modified in order to make a nonlinear potentiometer 36 that can be adapted to the useful travel required of the output shaft 2.

Manual adjustment of the position of the output shaft 2 is possible through the manual adjustment mechanism 29. Specifically, an external key (not shown) can be used to turn the bevel gear transmission 30 which consequently turns the third section 2c of the output shaft 2. The first intermediate section 2b of the output shaft 2 screws, into or out of the first, threaded end portion 23a of the hollow cylindrical body 23, thereby moving the output shaft 2 axially and adjusting its position.

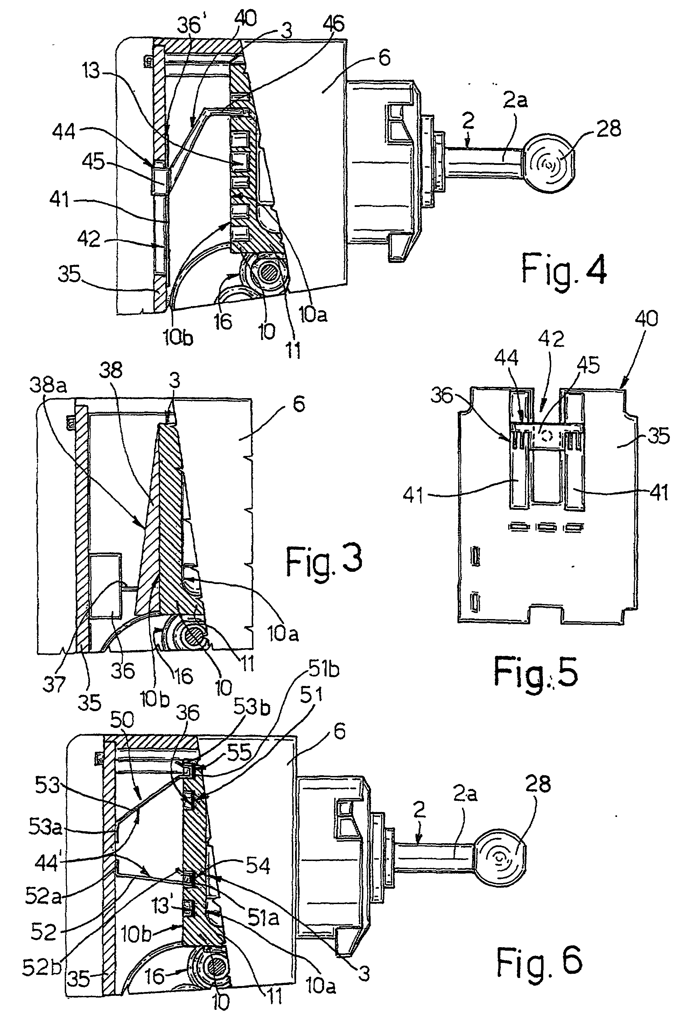

In an alternative to the embodiment shown in Fig. 2, cams can be used instead of the spiral groove 13. In particular the detail of Fig. 3 shows a cam 38 formed on the second face 10b of the main body 10 of the drive wheel 3, the surface of which is inclined (38a) and can thus move the cursor 37 of the potentiometer 36 in a direction essentially perpendicular to the face 10b of the drive wheel 3.

The shape of the cam 38 can also be modified to give a nonlinear potentiometer 36 that can be adapted to the useful travel required of the output shaft 2.

Figures 4 and 5 show a different embodiment of the detecting device of the invention. The detecting device is marked 40 and differs from the detecting device 5 of Fig. 2 in that the potentiometer, here marked 36', is formed directly on the printed circuit 35 using thick film technology. In particular, there are on the printed circuit 35 (Fig. 5) two parallel resistive strips 41 separated by a recess 42 defining a guide for the cursor, here marked 44, of the potentiometer 36'. In this type of embodiment, the cursor 44 comprises (Fig. 3) a sliding portion 45 able to move in the recess 42 and an engaging portion 46 that engages in the spiral groove 13 and causes the cursor 44 to move translationally as the drive wheel 3 rotates.

Figure 6 shows another embodiment of the position detecting device of the invention. The position detecting device is marked 50 and differs from the position detecting device 40 of Figures 4 and 5 in that the groove, here marked 13', is not now spiral in form but composed of two concentric annular channels 54, 55, an inner and an outer respectively. In particular the inner annular channel 54 is closed, while the outer channel 55 is open with one end connected to the inner annular channel 54 via a connecting channel (not illustrated).

In this embodiment the potentiometer 36' of Fig. 4 is formed by introducing directly in the annular channels 54, 55 a resistive strip 51, preferably made by thick film technology.

The cursor, here marked 44', comprises two contact elements 52, 53 each having a first end 52a, 53a fixed to the printed circuit 35 and a second or opposite end 52b, 53b in electrical contact with the resistive strip 51 and able to move in the groove 13'. In particular, the second end 52b of the first contact element 52 connects the printed circuit 35 electrically to a first portion 51a of the resistive strip 51 situated in the inner annular channel 54, while the second end 53b of the second contact element 53 connects the printed circuit 35 electrically to a portion 51b of the resistive strip 51 situated in the outer annular channel 55 and dependent on the angular position of the drive wheel 3.

In this way the length of the resistive strip 51 extending between the two contact elements 52, 53, and hence the resistance between the two contact elements 52, 53, varies according to the position of the output shaft 2.

The advantages of the present device are as follows. In the first place it reduces the cost and size of the position detecting device by using a simpler potentiometer situated in an ideal position relative to the drive wheel and made by simple, inexpensive manufacturing methods.

In addition, the present device makes it possible to make nonlinear potentiometers that can be adapted to the useful travel required of the headlight aim-correcting mechanism by simply increasing the movement of the potentiometer itself in certain portions of the useful travel of the drive wheel.

## Claims

1. Device (5; 40; 50) for detecting the position of the output shaft of an actuator (1) that comprises output components (2, 3) that include an output shaft (2) and a drive wheel (3) acting on said output shaft (2), which detecting device (5; 40; 50) comprises a potentiometer (36; 36') with a cursor (37; 44; 44') and drive means (13; 13'; 38) for moving said cursor (37; 44; 44') in accordance with the movements of said output components (2, 3), which device is **characterized in that** said drive means (13; 13'; 38) comprise cam means (13; 13'; 38) mounted on said drive wheel (3) and **in that** said cursor (37; 44; 44') of said potentiometer (36; 36') engages with said cam means (13; 13'; 38).

2. Device according to Claim 1, **characterized in that** said cam means (13; 13'; 38) are situated on one face (10b) of said drive wheel (3).

3. Device according to Claim 2, **characterized in that** said cam means (13; 13') comprise a groove (13; 13') on said face (10b) of said drive wheel (3) and **in that** an end portion (37a; 46; 52b, 53b) of said cursor (37; 44; 44') of said potentiometer (36; 36') sits in said groove (13; 13').

4. Device according to Claim 3, **characterized in that** said groove (13) is basically a spiral.

5. Device according to any one of Claims 2 to 4, **characterized in that** it comprises a printed circuit (35) opposite said drive wheel (3), **in that** said potentiometer (36') comprises at least one strip of resistive material (41) situated on said printed circuit (35) and **in that** said cursor (44) comprises a sliding portion (45) able to move on said strip of resistive material (41) and a portion (46) that engages in said cam means (13).

6. Device according to Claim 3 or 4, **characterized in that** it comprises a printed circuit (35) opposite said drive wheel (3), **in that** said potentiometer (36') comprises a strip of resistive material (51) situated on said drive wheel (3) and **in that** said cursor (44') comprises a first and a second contact element (52, 53), both fixed to said printed circuit (35) and both connecting said printed circuit (35) electrically to a first (51a) and a second (51b) respective portion of said strip of resistive material (51).

7. Device according to Claim 6, **characterized in that** said strip of resistive material (51) sits in said groove (13').

8. Device according to Claim 2, **characterized in that** said cam means (38) have an inclined surface (38a) for moving said cursor (37) along a direction that is essentially perpendicular to said face (10b) of said drive wheel (3).

9. Device according to any one of Claims 2 to 8,
**characterized in that** said potentiometer (36') is a thick film potentiometer.

10. Device according to any one of Claims 2 to 9,
**characterized in that** said output shaft (2) has a portion (2a) situated on a first side of said drive wheel (3) which is the opposite side from a second side defining said face (10b).

## Patentansprüche

1. Vorrichtung (5; 40; 50) zum Erfassen der Position der Abtriebswelle eines Stellantriebs (1), der Ausgabekomponenten (2, 3) umfaßt, die eine Abtriebswelle (2) und ein Antriebsrad (3), das auf die Abtriebswelle (2) wirkt, enthalten, wobei die Erfassungsvorrichtung (5; 40; 50) ein Potentiometer (36; 36') mit einem Läufer (37; 44; 44') und einer Antriebseinrichtung (13; 13'; 38) zum Bewegen des Läufers (37; 44; 44') gemäß den Bewegungen der Ausgabekomponenten (2, 3) enthält, wobei die Vorrichtung **dadurch gekennzeichnet ist, daß** die Antriebseinrichtung (13; 13'; 38) eine Nockeneinrichtung (13; 13'; 38) enthält, die an dem Antriebsrad (3) angebracht ist, und der Läufer (37; 44; 44') des Potentiometers (36; 36') mit der Nockeneinrichtung (13; 13'; 38) in Eingriff ist.

2. Vorrichtung nach Anspruch 1, **dadurch gekennzeichnet, daß** sich die Nockeneinrichtung (13; 13'; 38) an einer Fläche (10b) des Antriebsrades (3) befindet.

3. Vorrichtung nach Anspruch 2, **dadurch gekennzeichnet, daß** die Nockeneinrichtung (13; 13') eine Nut (13, 13') an der Fläche (10b) des Antriebsrades (3) enthält und ein Endabschnitt (37a; 46; 52b; 53b) des Läufers (37; 44; 44') des Potentiometers (36; 36') in der Nut (13; 13') sitzt.

4. Vorrichtung nach Anspruch 3, **dadurch gekennzeichnet, daß** die Nut (13) im wesentlichen eine Spirale ist.

5. Vorrichtung nach einem der Ansprüche 2 bis 4, **dadurch gekennzeichnet, daß** sie gegenüber dem Antriebsrad (3) eine gedruckte Schaltung (35) enthält, das Potentiometer (36') wenigstens einen Streifen aus resistivem Werkstoff (41) enthält, der auf der gedruckten Schaltung (35) angeordnet ist, und der Läufer (44) einen Gleitabschnitt (45), der sich auf dem Streifen aus resistivem Werkstoff (41) bewegen kann, und einen Abschnitt (46), der mit der Nockeneinrichtung (13) in Eingriff gelangt, enthält.

6. Vorrichtung nach Anspruch 3 oder 4, **dadurch gekennzeichnet, daß** sie gegenüber dem Antriebsrad (3) eine gedruckte Schaltung (35) enthält, das Potentiometer (36') einen Streifen aus resistivem Werkstoff (51) enthält, der an dem Antriebsrad (3) angeordnet ist, und der Läufer (44') ein erstes und ein zweites Kontaktelement (52, 53) enthält, die beide an der gedruckten Schaltung (35) befestigt sind und die beide die gedruckte Schaltung (35) mit einem ersten Abschnitt (51a) bzw. mit einem zweiten Abschnitt (51b) des Streifens aus resistivem Werkstoff (51) elektrisch verbinden.

7. Vorrichtung nach Anspruch 6, **dadurch gekennzeichnet, daß** der Streifen aus resistivem Werkstoff (51) in der Nut (13') sitzt.

8. Vorrichtung nach Anspruch 2, **dadurch gekennzeichnet, daß** die Nockeneinrichtung (38) eine geneigte Oberfläche (38a) aufweist, um den Läufer (37) in eine Richtung zu bewegen, die im wesentlichen senkrecht zur Fläche (10b) des Antriebsrades (3) ist.

9. Vorrichtung nach einem der Ansprüche 2 bis 8, **dadurch gekennzeichnet, daß** das Potentiometer (36') ein Dickfilmpotentiometer ist.

10. Vorrichtung nach einem der Ansprüche 2 bis 9, **dadurch gekennzeichnet, daß** die Abtriebswelle (2) einen Abschnitt (2a) aufweist, der sich auf einer ersten Seite des Antriebsrades (3) befindet, die einer zweiten Seite, die die Fläche (10b) definiert, gegenüberliegt.

## Revendications

1. Dispositif (5 ; 40 ; 50) pour détecter la position de l'arbre de sortie d'un actionneur (1) qui comprend des composants de sortie (2, 3) qui incluent un arbre de sortie (2) et une roue d'entraînement (3) agissant sur ledit arbre de sortie (2), lequel dispositif de détection (5 ; 40 ; 50) comprend un potentiomètre (36 ; 36') avec un curseur (37 ; 44 ; 44') et des moyens d'entraînement (13 ; 13' ; 38) pour déplacer ledit curseur (37 ; 44 ; 44') conformément aux déplacements desdits composants de sortie (2, 3), lequel dispositif est **caractérisé en ce que** lesdits moyens d'entraînement (13 ; 13' ; 38) comprennent des moyens formant came (13 ; 13' ; 38) montés sur ladite roue d'entraînement (3) et **en ce que** ledit curseur (37 ; 44 ; 44') dudit potentiomètre (36 ; 36') vient en prise avec lesdits moyens formant came (13 ; 13' ; 38).

2. Dispositif selon la revendication 1, **caractérisé en ce que** lesdits moyens formant came (13 ; 13' ; 38) se situent sur une face (10b) de ladite roue d'entraînement (3).

3. Dispositif selon la revendication 2, **caractérisé en ce que** lesdits moyens formant came (13 ; 13') comprennent une gorge (13 ; 13') sur ladite face (10b) de ladite roue d'entraînement (3) et **en ce qu'**une partie d'extrémité (37a ; 46 ; 52b, 53b) dudit curseur (37 ; 44 ; 44') dudit potentiomètre (36 ; 36') se situe dans ladite gorge (13 ; 13').

4. Dispositif selon la revendication 3, **caractérisé en ce que** ladite gorge (13) est fondamentalement une spirale.

5. Dispositif selon l'une quelconque des revendications 2 à 4, **caractérisé en ce qu'**il comprend un circuit imprimé (35) opposé à ladite roue d'entraînement (3), **en ce que** ledit potentiomètre (36') comprend au moins une bande de matériau résistif (41) située sur ledit circuit imprimé (35) et **en ce que** ledit curseur (44) comprend une partie coulissante (45) capable de se déplacer sur ladite bande de matériau résistif (41) et une partie (46) qui vient en prise avec lesdits moyens formant came (13).

6. Dispositif selon la revendication 3 ou 4, **caractérisé en ce qu'**il comporte un circuit imprimé (35) en vis-à-vis de ladite roue d'entraînement (3), **en ce que** ledit potentiomètre (36') comprend une bande de matériau résistif (51) située sur ladite roue d'entraînement (3) et **en ce que** ledit curseur (44') comprend un premier et un second élément de contact (52, 53), tous deux fixés audit circuit imprimé (35) et tous deux reliant électriquement ledit circuit imprimé (35) à une première partie (51a) et une seconde partie (51b), respectivement, de ladite bande de matériau résistif (51).

7. Dispositif selon la revendication 6, **caractérisé en ce que** ladite bande de matériau résistif (51) se situe dans ladite gorge (13').

8. Dispositif selon la revendication 2, **caractérisé en ce que** lesdits moyens formant came (38) ont une surface inclinée (38a) pour déplacer ledit curseur (37) suivant une direction qui est essentiellement perpendiculaire à ladite face (10b) de ladite roue d'entraînement (3).

9. Dispositif selon l'une quelconque des revendications 2 à 8, **caractérisé en ce que** ledit potentiomètre (36') est un potentiomètre à couche épaisse.

10. Dispositif selon l'une quelconque des revendications 2 à 9, **caractérisé en ce que** ledit arbre de sortie (2) a une partie (2a) qui se situe sur un premier côté de ladite roue d'entraînement (3) qui est le côté opposé par rapport à un second côté définissant ladite face (10b).
